(19) **Europäisches Patentamt**

**European Patent Office**

**Office européen des brevets**

(11) **EP 0 847 892 B1**

(12) **EUROPEAN PATENT SPECIFICATION**

(45) Date of publication and mention
of the grant of the patent:
**27.03.2002 Bulletin 2002/13**

(51) Int Cl.$^7$: **B60N 2/06**, B60N 2/02

(21) Application number: **97203580.2**

(22) Date of filing: **17.11.1997**

(54) **Vehicle seat position detection system**

Positionsbestimmungssystem für Fahrzeugsitze

Système pour détecter la position d'un siège de véhicule.

(84) Designated Contracting States:
**DE ES FR IT**

(30) Priority: **12.12.1996 GB 9625852**

(43) Date of publication of application:
**17.06.1998 Bulletin 1998/25**

(73) Proprietor: **Delco Electronics Europe GmbH**
**65189 Wiesbaden (DE)**

(72) Inventor: **Hirsch, Krystian**
**42109 Wuppertal (DE)**

(74) Representative: **Denton, Michael John**
**Delphi Automotive Systems**
**Centre Technique Paris**
**117 avenue des Nations**
**B.P. 60059**
**95972 Roissy Charles de Gaulle Cedex (FR)**

(56) References cited:
**EP-A- 0 615 879**          **DE-A- 3 803 602**
**US-A- 4 900 079**

**Description**

Technical Field

The present invention relates to a vehicle seat position detection system in accordance with the preamble, disclosed for example in document DE 3803602 A, of the independent claim 1.

Background of the Invention

Motor vehicles are being designed in such a way that certain seats within the vehicle can be moved from one location to another. This is particularly so in multi-purpose vehicles (MPVs) which are capable of carrying a large number of occupants. In such vehicles, the rear seats (that is, the seats behind the front seats of the vehicle) can be removed, or moved to different locations. With the use of electrically operated devices and sensors associated with a vehicle seat (such as air bags, seat belt tensioners, seat belt locking sensors, etc.) it is a requirement that the exact location of a seat is known.

Summary of the Invention

The aim of the present invention is to provide a system which can identify the location of a vehicle seat in one of a number of possible locations.
A vehicle seat position detection system in accordance with the present invention as defined in claim 1 comprises a pair of mounting rails securable to a floor of a motor vehicle, the rails being spaced apart and extending substantially parallel to one another; a seat detection switch associated with at least one of the mounting rails, the switch being normally open but being moved to a closed position when a vehicle seat is secured to the mounting rails; and a monitoring circuit connected to the seat detection switch to monitor the status of the switch.
The present invention provides a system by which the location of a vehicle seat can be determined.

Brief Description of the Drawings

The present invention will now be described, by way of example, with reference to the accompanying drawings, in which:-

Figure 1 is a schematic layout of seat mounting rails within a vehicle showing five potential seat positions in which a vehicle seat position detection system in accordance with the present invention is used;
Figure 2 is the schematic layout shown in Figure 1 showing three further potential seat positions;
Figure 3 is the schematic layout shown in Figure 1 showing two further potential seat positions;
Figure 4 is the schematic layout shown in Figure 1 showing one further potential seat position;
Figure 5 is the schematic layout shown in Figure 1 showing the layout for the seat detection switches for the vehicle seat position detection system of Figure 1;
Figure 6 is the schematic layout shown in Figure 1 showing the layout for the electrical connections for the vehicle seat position detection system of Figure 1;
Figure 7 is a front view, shown schematically, of the seat detection switches and electrical connections of Figures 5 and 6 prior to the mounting of a seat on the seat mounting rails;
Figure 8 is a front view, shown schematically, of the seat detection switches and electrical connections of Figures 5 and 6 after the mounting of a seat on the seat mounting rails; and
Figure 9 is a circuit diagram of the monitoring circuit and seat detection switches of the vehicle seat position detection system of Figure 1.

Description of the Preferred Embodiment

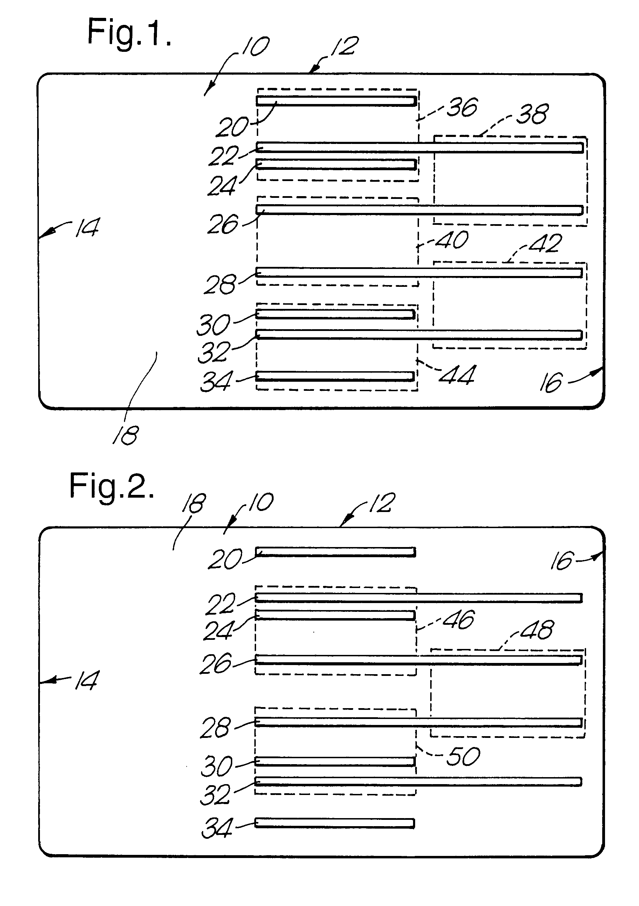

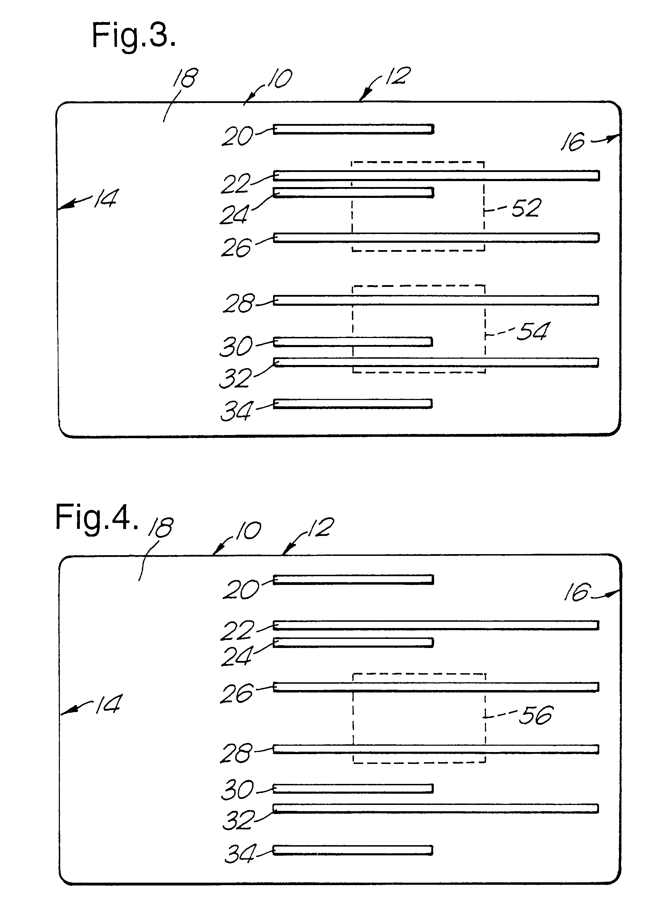

Referring to Figures 1 to 4, an outline of a motor vehicle 10 is shown which has a vehicle body 12 with a front 14 and a rear 16. The vehicle body 12 comprises a floor 18 on which are secured eight mounting rails 20-34. The mounting rails 20-34 lie along axes which are substantially parallel to each other, and substantially parallel to a centre line extending between the front 14 and the rear 16 of the motor vehicle 10. A predetermined spacing exists between the pair of rails 20 and 24, between the pair of rails 22 and 26, between the pair of rails 26 and 28, between the pair of rails 28 and 32, and between the pair of rails 30 and 34. The spacing between each pair of rails is such that a vehicle seat (not shown) can be secured to any of each pair of rails. With the arrangement shown in Figures 1 to 4, it can be seen that a vehicle seat can be position in any one of eleven different positions, as indicated by the dashed outlines 36-56, and that up to five vehicle seats may be secured to the rails 20-34. With such an arrangement, or a similar arrangement, it is necessary to know if a vehicle seat is secured to any pair of rails 20-34, and the actual location of the vehicle seat.

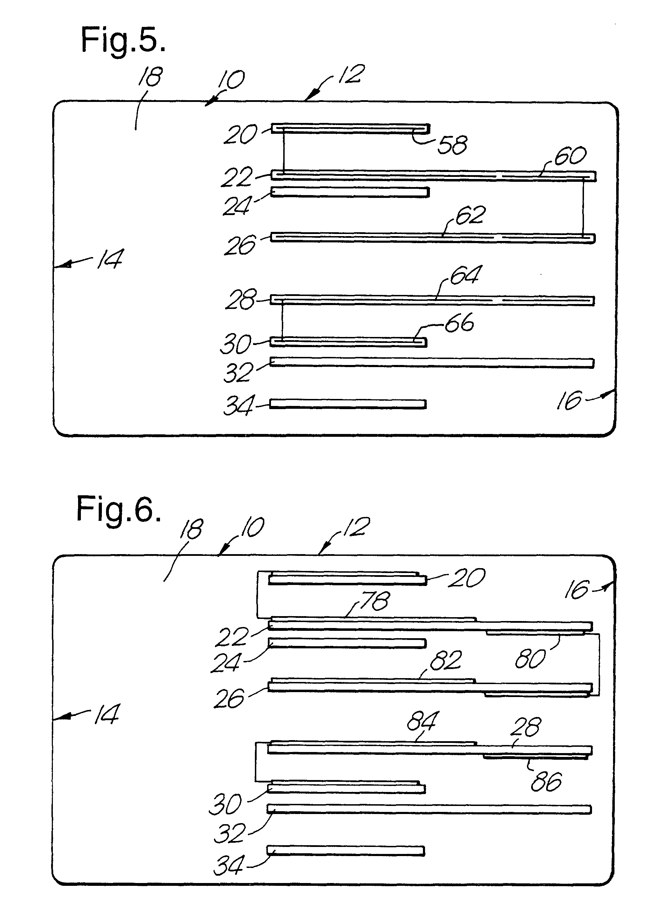

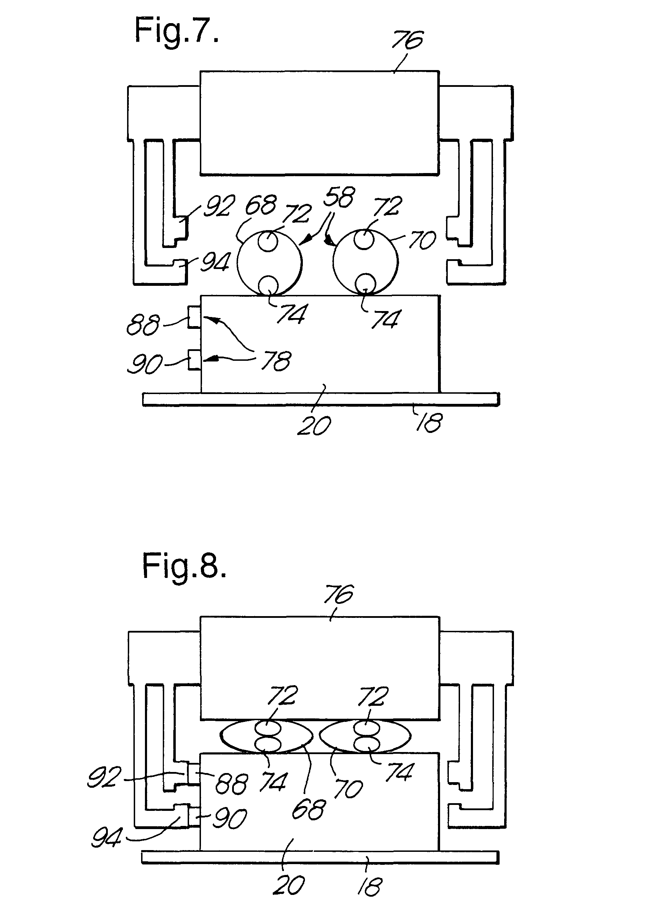

In the present invention, a seat detection switch 58-66 (Figure 5) is associated with at least one rail of each pair of rails. In the preferred embodiment, each seat detection switch 58-66 comprises a pair of flexible tubes 68,70 (Figures 7 and 8) which are mounted on top of the respective rail 20-30 of each pair of rails. Each tube 68,70 has a pair of longitudinally extending flexible electrical conductors 72,74 which are normally spaced apart (Figure 7). On securing a vehicle seat (not shown) to the rail 20-34, a portion 76 of the seat engages and compresses the tubes 68,70 to bring the electrical conductors 72,74 into contact with one another (Figure 8). Connection of the electrical conductors 72,74 to a suitable monitoring circuit 96 (described below) will provide an indication of the presence of a vehicle seat and its location as a result of the electrical shorting of the conductors. In the present arrangement, only five pairs of flexible tubes 68,70 are required to provide an indication of vehicle seat presence and location in the positions 36-56. Other forms of seat detection switch may be used such as a single flexible tube (as described above) associated with at least one rail 20-34 of each pair of rails, or push-button switches, or any other suitable type of switch which is actuable when a seat is secured to a pair of rails 20-34.

Also associated with at least one rail of each pair of rails 20-34 are pairs 78-86 of electrical connector rails 88,90 (Figures 6 and 7). In the preferred embodiment, the connector rails 88,90 are mounted on one side of the associated rail 20-34 (Figures 7 and 8). On mounting a vehicle seat on a pair of rails 20-34, electrical connectors 92,94 associated with the vehicle seat make an electrical connection with a respective connector rail 88,90 (Figures 7 and 8). The electrical connectors 92,94 associated with each vehicle seat are connected to electrically operated devices and sensors associated with the seat, such as air bags, seat belt tensioners, seat belt locking sensors, etc. The connector rails 88,90 are also connected with the monitoring circuit 96 associated with the seat detection switches 58-66, so that on securing a vehicle seat to a pair of rails 20-34, the monitoring circuit can also monitor and control the operation of the electrically operated devices and sensors associated with that seat. Alternatively, the pairs 78-86 of connector rails 88,90 may be connected to a separate control circuit (not shown) which also receives signals from the monitoring circuit 94, the control circuit controlling the operation of the electrically operated devices and sensors associated with that seat. In the present arrangement, only five pairs of connector rails 88,90 are required to provide electrical connections to a vehicle seat located in any one of the positions 36-56. Other forms of electrical connection may be associated with the rails 20-34 to provide electrical connection to the devices and sensors associated with a vehicle seat.

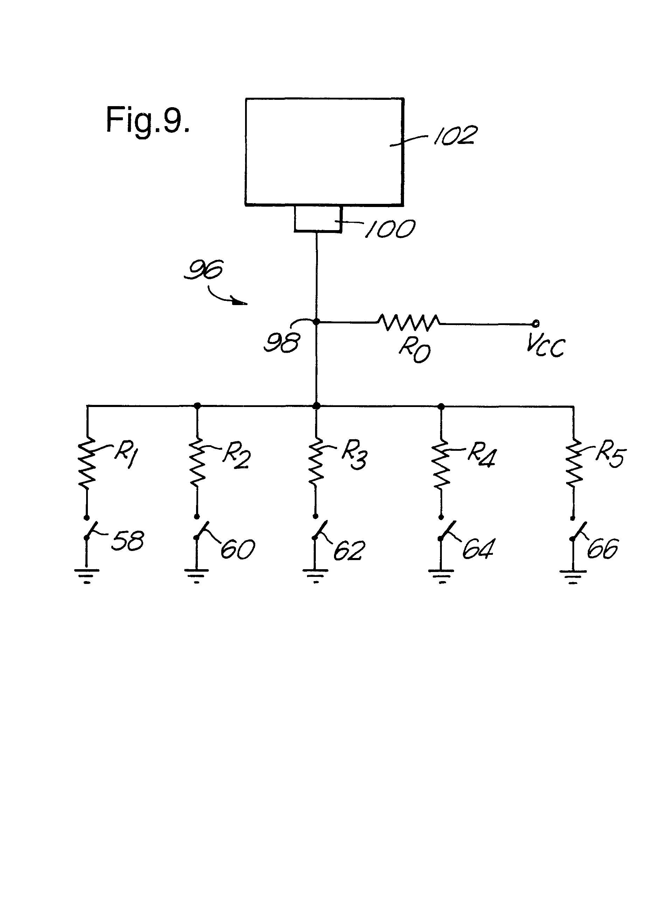

Referring to Figure 9, the monitoring circuit 96 comprises a microcomputer 102 with an associated digital to analogue converter 100 which receives voltage signals from a junction 98. The junction 98 is connected to a voltage source $V_{cc}$ by way of a resistor $R_0$. The junction 98 is also connected to each seat detection switch 58-66 by way of a resistor $R_1$-$R_5$ respectively. The combined effect $R_s$ of the resistors $R_1$-$R_5$ at junction 98 is defined by

$$R_s = (R_1{}^*R_2{}^*R_3{}^*R_4{}^*R_5) / \{(s_1{}^*R_2{}^*R_3{}^*R_4{}^*R_5) + (R_1{}^*s_2{}^*R_3{}^*R_4{}^*R_5) +$$

$$(R_1{}^*R_2{}^*s_3{}^*R_4{}^*R_5) + (R_1{}^*R_2{}^*R_3{}^*s_4{}^*R_5) + (R_1{}^*R_2{}^*R_3{}^*R_4{}^*s_5)\}$$

where $s_1$-$s_5$ describes the state of a seat detection switch 58-66 respectively with $s_n = 0$ when a switch is open, and $s_n = 1$ when a switch is closed. By choosing the values of $R_1$ to $R_5$ accordingly, it is possible to provide a value for $R_s$ which has a different value for each combination of vehicle seats present in the motor vehicle 10. The value of $R_s$ provides a voltage signal $V_{in}$ at the converter 100

$$V_{in} = V_{cc}{}^*R_s / (R_0+R_s)$$

which is assessed by the microcomputer 102 to determine the seat configuration present in the motor vehicle. From this determination, the microcomputer can either activate the relevant the electrically operated devices and sensors associated with each seat that is present, or send a signal to a separate control circuit to activate the electrically operated devices and sensors associated with each seat.

The arrangement of the mounting rails 20-34 may be different from one vehicle to another, and the present invention is such that the vehicle seat position detection system can be used with other layouts for the mounting rails. Also, as an alternative, the monitoring circuit may be such that it monitors the status of each seat detection switch on an individual basis, and either activates the relevant electrically operated devices and sensors associated with each seat that is present, or sends a signal to a separate control circuit to activate the electrically operated devices and sensors associated with each seat.

**Claims**

1. A vehicle seat position detection system comprising at least a pair of mounting rails (20-34) securable to a floor (18) of a motor vehicle (10), the rails being spaced apart and extending substantially parallel to one another; and a seat detection switch (58-66) associated with at least one of the mounting rails of each pair, **characterised in that** each switch is adapted to detect the presence of a vehicle seat on the mounting rails, each switch being normally open but being moved to a closed position when a vehicle seat is secured to the mounting rails; and **in that** a monitoring circuit (96) for monitoring the location of a seat is connected to each of the seat detection switches to monitor the status of each switch.

2. A vehicle seat position detection system as claimed in Claim 1, wherein the seat detection switch (58-66) comprises a flexible tube (68,70) with a pair of electrical conductors (72,74) mounted internally thereof, the conductors being normally diametrically spaced when a vehicle seat is not secured to the mounting rails (20-34).

3. A vehicle seat position detection system as claimed in Claim 1 or Claim 2, wherein at least one electrical connector rail (88,90) is associated with at least one of the mounting rails (20-34) for providing an electrical connection with a corresponding electrical connector (92,94) on a vehicle seat when secured to the mounting rails.

4. A vehicle seat position detection system as claimed in any one of Claims 1 to 3, wherein the monitoring circuit (96) comprises a resistor ($R_1$-$R_5$) connected in series with the seat detection switch (58-66); a resistor ($R_0$) connected to a voltage source ($V_{cc}$) and to the resistor connected to the seat detection switch ($R_1$-$R_5$); and a microcomputer (102) connected to the junction (98) between the two resistors and monitoring the voltage at junction.

5. A vehicle seat position detection system as claimed in any one of Claims 1 to 4 comprising at least two pairs of mounting rails (20-34), and a seat detection switch (58-66) associated with each pair of mounting rails, wherein the monitoring circuit 96 is connected to each seat detection switch to monitor the status of each switch.

**Patentansprüche**

1. System zur Detektion einer Fahrzeugsitzposition mit zumindest einem Paar von Befestigungsschienen (20-34), die an einem Boden (18) eines Kraftfahrzeuges (10) befestigbar sind, wobei die Schienen voneinander beabstandet sind und sich im wesentlichen parallel zueinander erstrecken; und einem Sitzdetektionsschalter (58-66), der zumindest einer der Befestigungsschienen jedes Paares zugeordnet ist, **dadurch gekennzeichnet, dass** jeder Schalter derart ausgebildet ist, um die Anwesenheit eines Fahrzeugsitzes an den Befestigungsschienen zu detektieren, wobei jeder Schalter normalerweise geöffnet ist, aber in eine geschlossene Stellung bewegt wird, wenn ein Fahrzeugsitz an den Befestigungsschienen befestigt wird; und dass eine Überwachungsschaltung (96) zur Überwachung des Ortes eines Sitzes mit jedem der Sitzdetektionsschalter verbunden ist, um den Status jedes Schalters zu überwachen.

2. System zur Detektion einer Fahrzeugsitzposition nach Anspruch 1, wobei der Sitzdetektionsschalter (58-66) ein flexibles Rohr (68, 70) mit einem Paar elektrischer Leiter (72, 74) umfasst, das in diesem angebracht ist, wobei die Leiter normalerweise gegenüberliegend beabstandet sind, wenn kein Fahrzeugsitz an den Befestigungsschienen (20-34) befestigt ist.

3. System zur Detektion einer Fahrzeugsitzposition nach Anspruch 1 oder 2, wobei zumindest eine elektrische Leiterschiene (88, 90) zumindest einer der Befestigungsschienen (20-34) zugeordnet ist, um eine elektrische Verbindung mit einem entsprechenden elektrischen Leiter (92, 94) an einem Fahrzeugsitz vorzusehen, wenn dieser an den Befestigungsschienen angebracht wird.

4. System zur Detektion einer Fahrzeugsitzposition nach einem der Ansprüche 1 bis 3, wobei die Überwachungsschaltung (96) umfasst: einen Widerstand ($R_1$-$R_5$), der in Reihe mit dem Sitzdetektionsschalter (58-66) geschaltet ist; einen Widerstand ($R_0$), der mit einer Spannungsquelle ($V_{cc}$) und dem Widerstand verbunden ist, der mit dem Sitzdetektionsschalter ($R_1$-$R_5$) verbunden ist, und einen Mikrocomputer (102), der mit der Verbindungsstelle (98) zwischen den beiden Widerständen verbunden ist und die Spannung an der Verbindungsstelle überwacht.

5. System zur Detektion einer Fahrzeugsitzposition nach einem der Ansprüche 1-4, mit zumindest zwei Paaren von Befestigungsschienen (20-34) und einem Sitzdetektionsschalter (58-66), der jedem Paar von Befestigungsschienen zugeordnet ist, wobei die Überwachungsschaltung (96) mit jedem Sitzdetektionsschalter verbunden ist, um den Status jedes Schalters zu überwachen.

## Revendications

1. Dispositif de détection de position de siège de véhicule comprenant au moins une paire de rails de montage (20 à 34) pouvant être fixés sur un plancher (18) d'un véhicule à moteur (10), les rails étant espacés l'un de l'autre et s'étendant sensiblement parallèlement l'un à l'autre ; et un commutateur de détection de siège (58 à 66) associé à au moins l'un des rails de montage de chaque paire, **caractérisé en ce que** chaque commutateur est adapté pour détecter la présence d'un siège de véhicule sur les rails de montage, chaque commutateur étant normalement ouvert, mais étant commuté en position fermée lorsqu'un siège de véhicule est fixé sur les rails de montage ; et **en ce qu'**un circuit de contrôle (96), destiné à contrôler l'emplacement d'un siège, est raccordé à chacun des commutateurs de détection de siège afin de contrôler l'état de chaque commutateur.

2. Dispositif de détection de position de siège de véhicule selon la revendication 1, dans lequel le commutateur de détection de siège (58 à 66) comprend un tube souple (68, 70) à l'intérieur duquel est monté une paire de conducteurs électriques (72, 74), les conducteurs étant normalement espacés diamétralement lorsqu'un siège de véhicule n'est pas fixé sur les rails de montage (20 à 34).

3. Dispositif de détection de position de siège de véhicule selon la revendication 1 ou la revendication 2, dans lequel, au moins un rail formant connecteur électrique (88, 90) est associé à au moins l'un des rails de montage (20 à 34) afin d'assurer un raccordement électrique avec un connecteur électrique (92, 94) correspondant sur un siège de véhicule, lorsqu'il est fixé sur les rails de montage.

4. Dispositif de détection de position de siège de véhicule selon l'une quelconque des revendications 1 à 3, dans lequel le circuit de contrôle (96) comprend une résistance ($R_1$ à $R_5$) raccordée en série avec le commutateur de détection de siège (58 à 66) ; une résistance ($R_0$) raccordée à une source de tension ($V_{cc}$) et à la résistance raccordée au commutateur de détection de siège ($R_1$ à $R_5$) ; et un micro-ordinateur (102) raccordé à la jonction (98) entre les deux résistances et contrôlant la tension sur la jonction.

5. Dispositif de détection de position de siège de véhicule selon l'une quelconque des revendications 1 à 4, comprenant au moins deux paires de rails de montage (20 à 34) et un commutateur de détection de siège (58 à 66) associé à chaque paire de rails de montage, dans lequel le circuit de contrôle (96) est raccordé à chaque commutateur de détection de siège afin de contrôler l'état de chaque commutateur.

Fig.1.

Fig.2.

Fig.3.

Fig.4.

EP 0 847 892 B1

# Fig.5.

# Fig.6.

# Fig.7.

# Fig.8.

Fig.9.